(19) Europäisches Patentamt
European Patent Office
Office européen des brevets

(11) **EP 4 628 536 A1**

(12) **EUROPEAN PATENT APPLICATION**
published in accordance with Art. 153(4) EPC

(43) Date of publication:
08.10.2025 Bulletin 2025/41

(21) Application number: 23898159.1

(22) Date of filing: 17.11.2023

(51) International Patent Classification (IPC):
*C08L 51/04* (2006.01)    *C08L 25/08* (2006.01)
*C08L 25/12* (2006.01)    *C08L 33/06* (2006.01)
*C08F 265/06* (2006.01)

(52) Cooperative Patent Classification (CPC):
C08F 265/06; C08L 25/08; C08L 25/12;
C08L 33/06; C08L 51/04

(86) International application number:
**PCT/KR2023/018507**

(87) International publication number:
**WO 2024/117628 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.11.2022 KR 20220165222

(71) Applicant: LOTTE CHEMICAL CORPORATION
Seoul 05551 (KR)

(72) Inventors:
• PARK, Jieun
Uiwang-si, Gyeonggi-do 16073 (KR)
• KIM, In-Chol
Uiwang-si, Gyeonggi-do 16073 (KR)
• KIM, Jungwook
Uiwang-si, Gyeonggi-do 16073 (KR)
• SHIN, Hyeongseob
Uiwang-si, Gyeonggi-do 16073 (KR)
• CHU, Donghui
Uiwang-si, Gyeonggi-do 16073 (KR)

(74) Representative: Germain Maureau
12, rue Boileau
69006 Lyon (FR)

(54) **THERMOPLASTIC RESIN COMPOSITION AND MOLDED ARTICLE USING SAME**

(57) The present invention relates to a thermoplastic resin composition and a molded article using the same. In an embodiment, provided is a thermoplastic resin composition including, based on (A) 100 parts by weight of a base resin including (A-1) 35 to 45 wt% of an acrylate-based graft copolymer; (A-2) 20 to 40 wt% of an alpha-methyl styrene-aromatic vinyl compound-vinyl cyanide compound copolymer; (A-3) 10 to 20 wt% of a polyalkyl (meth)acrylate resin; and (A-4) 0 to 30 wt% of a first aromatic vinyl compound-vinyl cyanide compound copolymer, (B) 2 to 5 parts by weight of a second aromatic vinyl compound-vinyl cyanide compound copolymer, which has a weight average molecular weight of 20 times or more that of the first aromatic vinyl compound-vinyl cyanide compound copolymer (A-4); (C-1) 0.5 to 2 parts by weight of a monomolecular first light stabilizer; and (C-2) 0.5 to 2 parts by weight of a polymeric second light stabilizer.

[FIG. 1]

## Description

### [Technical Field]

A thermoplastic resin composition and a molded article using the same are disclosed.

### [Background Art]

In line with the recent environmentally-friendly trend, demand for unpainted materials for automotive interior/-exterior is increasing, and in particular, interest in high-gloss exterior materials is high.

An acrylonitrile-styrene-acrylate copolymer (ASA) resin, which is mainly used in the automobile exterior materials, is a thermoplastic resin having lower specific gravity than glass or metal but excellent moldability, chemical resistance, and the like.

However, the acrylonitrile-styrene-acrylate copolymer resin, when injection-molded, has problems of deteriorating appearance characteristics, coloring properties, weather resistance, initial gloss, and the like or reducing a gloss retention rate, which become more severe, when used for large molded articles.

### [Disclosure]

[Technical Problem]

The present invention is to provide a thermoplastic resin composition which secures excellent heat resistance, appearance characteristics, coloring properties, weather resistance, initial gloss, etc., and can maintain gloss retention at an excellent level.

[Technical Solution]

In an embodiment, provided is a thermoplastic resin composition includes, based on (A) 100 parts by weight of a base resin including (A-1) 35 to 45 wt% of an acrylate-based graft copolymer; (A-2) 20 to 40 wt% of an alpha-methyl styrene-based copolymer; (A-3) 10 to 20 wt% of a polyalkyl (meth)acrylate resin; and (A-4) 0 to 30 wt% of a first aromatic vinyl compound-vinyl cyanide compound copolymer, (B) 2 to 5 parts by weight of a second aromatic vinyl compound-vinyl cyanide compound copolymer, which has a weight average molecular weight of 20 times or more that of the first aromatic vinyl compound-vinyl cyanide compound copolymer (A-4); (C-1) 0.5 to 2 parts by weight of a monomolecular first light stabilizer; and (C-2) 0.5 to 2 parts by weight of a polymeric second light stabilizer.

The (A-1) acrylate-based graft copolymer may be a particle having a core-shell structure including a core composed of an acrylate-based rubbery polymer; and a shell formed by graft polymerization of an aromatic vinyl compound-vinyl cyanide compound copolymer onto the core.

The (A-1) acrylate-based graft copolymer may be an acrylonitrile-styrene-acrylate graft copolymer.

The (A-2) alpha-methyl styrene-based copolymer may be an alpha-methyl styrene-styrene-acrylonitrile copolymer.

The (A-4) first aromatic vinyl compound-vinyl cyanide compound copolymer may have a weight average molecular weight of 90,000 to 200,000 g/mol.

The (A-4) first aromatic vinyl compound-vinyl cyanide compound copolymer may be a first styrene-acrylonitrile copolymer.

An amount of the (A-4) first aromatic vinyl compound-vinyl cyanide compound copolymer in the (A) base resin may be 5 to 30 wt%.

The (B) second aromatic vinyl compound-vinyl cyanide compound copolymer may have a weight average molecular weight of 4,000,000 to 10,000,000 g/mol.

The (B) second aromatic vinyl compound-vinyl cyanide compound copolymer may be a second styrene-acrylonitrile copolymer.

The (C-1) monomolecular first light stabilizer may be a first hindered amine light stabilizer having a molecular weight of 100 to 500.

The (C-2) polymeric second light stabilizer may be a second hindered amine light stabilizer having a weight average molecular weight of 1,500 to 3,500 g/mol.

Another embodiment provides a molded article using the thermoplastic resin composition.

The molded article may have a lightness (L) of 5.0 to 10.5 as measured according to ASTM E308 using a specular component excluded (SCE) mode.

The molded article may have a color change (dE) before/after weather resistance evaluation according to SAE J2527 of 0.5 to 3.5, according to Equation 1:

[Equation 1]

$$dE = \sqrt{(dL)^2 + (da)^2 + (db)^2}$$

In Equation 1, dE denotes a color change before/after the weather resistance evaluation of the molded article; and L, a, and b are values measured using a spectrophotometer according to the CIE1976 colorimetric system, respectively, where dL denotes a difference in L values before/after the weather resistance evaluation of the molded article, da denotes a difference in a values before/after the weather resistance evaluation of the molded article, and db denotes a difference in b values before/after the weather resistance evaluation of the molded article.

The molded article may have a gloss retention rate of greater than or equal to 30% according to Equation 2 when evaluating weather resistance according to SAE J2527:

Gloss retention rate (%) = 100 (%) × [(Initial gloss of the molded article) - (Gloss of the molded article after weather resistance evaluation)] / (Initial gloss of the molded article)          [Equation 2]

In Equation 2, the initial gloss of the molded article and the gloss of the molded article after evaluating the weather resistance of the molded article are each based on an angle of 60° to the light source.

[Advantageous Effects]

The thermoplastic resin composition of an embodiment may secure excellent heat resistance, appearance characteristics, coloring properties, weather resistance, initial gloss, etc., and maintain a gloss retention rate at an excellent level. Accordingly, a molded article using the thermoplastic resin composition of an embodiment is particularly suitable for application to high-gloss exterior materials for automobiles.

**[Description of the Drawings]**

FIG. 1 is an image of the surface of the specimen of Example 2 captured by a camera.
FIG. 2 is an image of the surface of the specimen of Comparative Example 2 captured by a camera.

**[Best Mode]**

Hereinafter, embodiments of the present invention are described in detail. However, these embodiments are exemplary, and this disclosure is not limited thereto.

**(Definition of Terms)**

In this specification, 'weight average molecular weight' may be measured by dissolving a powder sample in an appropriate solvent and using Agilent Technologies 1200 series gel permeation chromatography (GPC) (Shodex polystyrene is used as the standard sample).

**(Thermoplastic Resin Composition)**

In an embodiment, provided is a thermoplastic resin composition including, based on (A) 100 parts by weight of a base resin including (A-1) 35 to 45 wt% of an acrylate-based graft copolymer; (A-2) 20 to 40 wt% of an alpha-methyl styrene-based copolymer; (A-3) 10 to 20 wt% of a polyalkyl (meth)acrylate resin; and (A-4) 0 to 30 wt% of a first aromatic vinyl compound-vinyl cyanide compound copolymer, (B) 2 to 5 parts by weight of a second aromatic vinyl compound-vinyl cyanide compound copolymer, which has a weight average molecular weight of 20 times or more that of the first aromatic vinyl compound-vinyl cyanide compound copolymer (A-4); (C-1) 0.5 to 2 parts by weight of a monomolecular first light stabilizer; and (C-2) 0.5 to 2 parts by weight of a polymeric second light stabilizer.

A thermoplastic resin composition of an embodiment is a composition in which the types and mixing ratios of components constituting the base resin and the types and mixing ratios of components added to the base resin are comprehensively controlled, thereby securing excellent appearance characteristics, coloring properties, weather resistance, initial gloss, etc., and maintaining a gloss retention rate at an excellent level. Accordingly, the thermoplastic resin composition of an embodiment and the molded article using the same are particularly suitable for application to high-gloss exterior materials for automobiles.

Hereinafter, the thermoplastic resin composition will be described in more detail.

[(A) Base Resin]

**The** (A) base resin may include (A-1) 35 to 45 wt% of an acrylate-based graft copolymer; (A-2) 20 to 40 wt% of an alpha-methyl styrene-based copolymer; (A-3) 10 to 20 wt% of a polyalkyl (meth)acrylate resin; and (A-4) 0 to 30 wt% of a first aromatic vinyl compound-vinyl cyanide compound copolymer. **In** this range, the base resin with excellent moldability, chemical resistance, heat resistance, impact resistance, gloss, and miscibility may be realized.

**In** the (A) base resin, the (A-4) first aromatic vinyl compound-vinyl cyanide compound copolymer is an optional component, but when used, its amount in the (A) base resin may be 5 to 30 wt%. Within this range, the heat resistance and impact resistance of the base resin may be improved.

(A-1) Acrylate-based Graft Copolymer

**In** an embodiment, the thermoplastic resin composition including the (A-1) acrylate-based graft copolymer is a material having a lower specific gravity than glass or metal, but improved moldability, chemical resistance, etc. However, when injection molding a thermoplastic resin composition including the (A-1) acrylate-based graft copolymer, appearance defects such as flow marks may occur, or coloring properties, weather resistance, initial gloss, etc. may be low, or a gloss retention rate may be poor. Accordingly, in an embodiment, various components may be added together with the (A-1) acrylate-based graft copolymer to constitute the (A) base resin.

**The** (A-1) acrylate-based graft copolymer may be a particle having a core-shell structure, including a core composed of an acrylate-based rubbery polymer; and a shell formed by graft polymerization of an aromatic vinyl compound-vinyl cyanide compound copolymer onto the core.

**The** (A-1) acrylate-based graft copolymer having the core-shell structure may be prepared by graft polymerizing a monomer mixture including an aromatic vinyl compound and a vinyl cyanide compound onto an acrylate-based rubbery polymer. The polymerization method may utilize a conventional preparing method, such as emulsion polymerization, suspension polymerization, solution polymerization, and bulk polymerization.

The acrylate-based rubbery polymer constituting the core of the (A-1) acrylate-based graft copolymer may be an alkyl acrylate-based rubbery polymer, specifically an alkyl acrylate-based rubbery polymer having 2 to 10 carbon atoms, and more specifically a butyl acrylate rubbery polymer, an ethylhexyl acrylate rubbery polymer, and a mixture thereof.

The acrylate-based rubbery polymer constituting the core of the (A-1) acrylate-based graft copolymer may have an average particle diameter of 100 to 400 nm, specifically 100 to 300 nm. **The** average particle diameter is a volume average particle diameter and may be a Z-average particle diameter measured using a dynamic light scattering analyzer. When the average particle size of the acrylate-based rubbery polymer satisfies the above range, a thermoplastic resin composition including the same may exhibit improved impact resistance, gloss, etc.

An amount of the core composed of an acrylate-based rubbery polymer in the (A-1) acrylate-based graft copolymer may be 40 to 60 wt% (based on solid content).

**The** aromatic vinyl compound forming the shell of the (A-1) acrylate-based graft copolymer may be styrene, $\alpha$-methylstyrene, p-methylstyrene, p-t-butylstyrene, 2,4-dimethylstyrene, chlorostyrene, vinyltoluene, vinylnaphthalene, or a combination thereof, and specifically, styrene may be used. In addition, the vinyl cyanide compound forming the shell of the (A-1) acrylate-based graft copolymer may be acrylonitrile, methacrylonitrile, or a combination thereof, and specifically, acrylonitrile may be used.

The shell of the (A-1) acrylate-based graft copolymer may be formed by graft polymerization of a monomer mixture of 70 to 80 wt% of the aromatic vinyl compound and 20 to 30 wt% of the vinyl cyanide compound onto the core.

For example, the (A-1) acrylate-based graft copolymer may be an acrylonitrile-styrene-acrylate graft copolymer (g-ASA). The g-ASA may be prepared by adding acrylonitrile and styrene to an acrylate-based rubbery polymer and performing a graft copolymerization reaction onto an acrylate-based rubbery polymer using a conventional polymerization method.

The (A) base resin may include (A-1) an acrylate-based graft copolymer in an amount of greater than or equal to 35 wt%, or greater than or equal to 37 wt%; but less than or equal to 45 wt%, or less than or equal to 43 wt%.

(A-2) Alpha-methyl Styrene ($\alpha$-Methyl styrene)-based Copolymer

The (A-2) alpha-methyl styrene-based copolymer is a material with improved heat resistance.

The (A-2) alpha-methyl styrene-based copolymer may be prepared by polymerizing a monomer mixture including alpha-methyl styrene. The polymerization method may be a conventional preparing method, such as emulsion polymerization, suspension polymerization, solution polymerization, and bulk polymerization.

The (A-2) alpha-methyl styrene-based copolymer may be a copolymer of a monomer mixture including 50 to 60 wt% of alpha-methyl styrene, 15 to 35 wt% of a vinyl cyanide compound, and 15 to 35 wt% of an aromatic vinyl compound. The heat resistance and weather resistance of a thermoplastic resin composition including the same within the above weight range may be improved.

The (A-2) aromatic vinyl compound forming the (A-2) alpha-methyl styrene-based copolymer may include substituted or unsubstituted styrene. The substituent of the styrene may include a halogen or a C1 to C10 alkyl group, but excludes an alpha-methyl group. In addition, the vinyl cyanide compound forming the (A-2) alpha-methyl styrene-based copolymer may be acrylonitrile, methacrylonitrile, fumaronitrile or a combination thereof.

The weight average molecular weight of the (A-2) alpha-methyl styrene-based copolymer may be 50,000 to 300,000 g/mol, specifically 100,000 to 200,000 g/mol. The weight average molecular weight is the polystyrene-reduced molecular weight measured using gel permeation chromatography (GPC). When the above range is satisfied, a thermoplastic resin composition including the same may exhibit improved impact resistance and fluidity.

For example, the (A-2) alpha-methyl styrene-based copolymer may be an alpha-methyl styrene-styrene-acrylonitrile copolymer (AMS-SAN).

The (A) base resin may include the (A-2) alpha-methyl styrene-based copolymer in a range of greater than or equal to 20 wt% and less than or equal to 40 wt%.

(A-3) Polyalkyl (meth)acrylate Resin

The (A-3) polyalkyl (meth)acrylate resin is a material that exhibits improved transparency, scratch resistance, and gloss, while also having improved compatibility with other components in the composition. In addition, the (A-3) polyalkyl (meth)acrylate is a material with improved weather resistance, and may improve weather resistance, gloss, and coloring properties of a thermoplastic resin composition and a molded article including the same.

The (A-3) polyalkyl (meth)acrylate resin may be prepared by polymerizing a monomer mixture including an alkyl (meth)acrylate. The (A-3) polyalkyl (meth)acrylate resin may be prepared by polymerizing a monomer mixture including the alkyl (meth)acrylate in an amount of greater than or equal to 50 wt%, specifically 80 to 99 wt%. The polymerization method may be produced using a conventional manufacturing method, such as emulsion polymerization, suspension polymerization, solution polymerization, and bulk polymerization.

The alkyl (meth)acrylate forming the (A-3) polyalkyl (meth)acrylate resin may have a $C_1$ to $C_{10}$ alkyl group, and specifically may be methyl (meth)acrylate, ethyl (meth)acrylate, butyl (meth)acrylate, glycidyl (meth)acrylate, hydroxyethyl (meth)acrylate, or a combination thereof.

The (A-3) polyalkyl (meth)acrylate resin may have a weight average molecular weight of 10,000 to 200,000 g/mol, and specifically 15,000 to 150,000 g/mol. When the weight average molecular weight of the (A-3) polyalkyl (meth)acrylate resin is within the above range, the scratch resistance, processability, etc. of the thermoplastic resin composition including the same are improved.

For example, the (A-3) polyalkyl (meth)acrylate resin may be polymethyl methacrylate (PMMA).

The (A) base resin may include the (A-3) polyalkyl (meth)acrylate resin in an amount of greater than or equal to 10 wt%, greater than or equal to 15 wt%, or greater than or equal to 17 wt%; but less than or equal to 20 wt%.

(A-4) First Aromatic Vinyl Compound-Vinyl Cyanide Compound Copolymer

The (A-4) first aromatic vinyl compound-vinyl cyanide compound copolymer is a material having improved heat resistance, chemical resistance, and fluidity.

Specifically, the (A-4) first aromatic vinyl compound-vinyl cyanide compound copolymer may be prepared by polymerizing a monomer mixture including an aromatic vinyl compound and a vinyl cyanide compound. The polymerization method may utilize a conventional preparing method, such as emulsion polymerization, suspension polymerization, solution polymerization, and bulk polymerization.

The aromatic vinyl compound forming the (A-4) first aromatic vinyl compound-vinyl cyanide compound copolymer may include substituted or unsubstituted styrene. The substituent of the styrene may include a halogen or a C1 to C10 alkyl group, but excludes an alpha-methyl group. Additionally, the vinyl cyanide compound forming the (A-4) first aromatic vinyl compound-vinyl cyanide compound copolymer may be acrylonitrile, methacrylonitrile, fumaronitrile or a combination thereof.

The (A-4) first aromatic vinyl compound-vinyl cyanide compound copolymer may have a weight average molecular weight of less than or equal to 1/20 of the (B) second aromatic vinyl compound-vinyl cyanide compound copolymer described below, and specifically, may have a weight average molecular weight of 90,000 to 200,000 g/mol.

The weight average molecular weight is the polystyrene-reduced molecular weight measured using gel permeation chromatography (GPC). When the above range is satisfied, a thermoplastic resin composition including the same may exhibit improved impact resistance and fluidity.

For example, the first aromatic vinyl-vinyl cyanide copolymer (A-4) may be a first styrene-acrylonitrile copolymer (SAN) having a weight average molecular weight of 90,000 to 200,000 g/mol.

**The** (A) base resin may not include the (A-4) first aromatic vinyl-vinyl cyanide copolymer (0 wt%); or may include greater than 0 wt% or greater than or equal to 5 wt% and less than or equal to 30 wt%.

[(B) Second Aromatic Vinyl Compound-Vinyl Cyanide Compound Copolymer]

**The** (B) second aromatic vinyl compound-vinyl cyanide compound copolymer is a material having a very high weight average molecular weight compared to the (A-4) first aromatic vinyl compound-vinyl cyanide compound copolymer, and may suppress appearance defects such as flow marks during molding of a thermoplastic resin composition of an embodiment.

A thermoplastic resin composition of an embodiment further includes 2 to 5 parts by weight of (B) a second aromatic vinyl compound-vinyl cyanide compound copolymer, based on 100 parts by weight of the (A) base resin. In this range, the effect of supplementing the heat resistance and impact resistance of the thermoplastic resin composition including the (A) base resin and suppressing appearance defects of the molded article is remarkable.

The (B) second aromatic vinyl compound-vinyl cyanide compound copolymer may be prepared by polymerizing a monomer mixture including an aromatic vinyl compound and a vinyl cyanide compound, similarly to the (A-4) first aromatic vinyl compound-vinyl cyanide compound copolymer. In this regard, the polymerization method of the (B) second aromatic vinyl compound-vinyl cyanide compound copolymer, the monomer forming the same, etc. are the same as those described for the (A-4) first aromatic vinyl compound-vinyl cyanide compound copolymer.

However, the (B) second aromatic vinyl compound-vinyl cyanide compound copolymer may have a weight average molecular weight of 20 times or more, specifically 20 to 50 times, that of the (A-4) first aromatic vinyl compound-vinyl cyanide compound copolymer, and specifically may have a weight average molecular weight of 4,000,000 to 10,000,000 g/mol. **The** weight average molecular weight is the polystyrene-reduced molecular weight measured using gel permeation chromatography (GPC). When the above range is satisfied, a thermoplastic resin composition including the same may exhibit a more excellent appearance defect suppression effect.

For example, the (B) second aromatic vinyl-vinyl cyanide copolymer may be a second styrene-acrylonitrile copolymer (SAN) having a weight average molecular weight of 4,000,000 to 10,000,000 g/mol.

[(C) Light Stabilizer]

The (C) light stabilizer including the (C-1) monomolecular first light stabilizer and the (C-2) polymeric second light stabilizer has excellent heat stability, light resistance and weather resistance, and particularly excellent stability against ultraviolet (UV) rays. In the (C) light stabilizer, compared to the (C-1) monomolecular first light stabilizer, the (C-2) polymeric second light stabilizer has a low degree of volatilization during processing and is difficult to decompose, thereby exhibiting superior weather resistance.

The thermoplastic resin composition of an embodiment includes 0.5 to 2 parts by weight of the (C-1) monomolecular first light stabilizer and 0.5 to 2 parts by weight of the (C-2) polymeric second light stabilizer, based on 100 parts by weight of the (A) base resin. In this range, the effects of the (C-1) monomolecular first light stabilizer and the (C-2) polymeric second light stabilizer are harmonized, so that the weather resistance of a molded article using the thermoplastic resin composition of an embodiment may be improved. Specifically, it is possible to improve gloss retention rate while suppressing color change (dE) before/after exposure to light such as UV of a molded article.

(C-1) Monomolecular First Light Stabilizer

The (C-1) monomolecular first light stabilizer may be a first hindered amine light stabilizer (HALS) having a molecular weight of 100 to 500.

For example, the (C-1) monomolecular first light stabilizer may be bis(2,2,6,6-tetramethyl-4-piperidyl) sebacate.

(C-2) Polymeric Second Light Stabilizer

The (C-2) polymeric second light stabilizer may be a first hindered amine light stabilizer (HALS) having a weight average molecular weight of greater than or equal to 2,000 g/mol, specifically, 1,500 to 3,500 g/mol.

For example, the (C-2) polymeric second light stabilizer may be poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]].

(D) Additives

The thermoplastic resin composition of an embodiment may further include one or more additives as needed to achieve a balance between the respective properties or depending on the final use of the thermoplastic resin composition.

Specifically, the (D) additives may include a flame retardant, a nucleating agent, a coupling agent, a filler, a plasticizer, an activator, an antibacterial agent, a release agent, an antioxidant, a heat stabilizer, an antistatic agent, a pigment, a dye, and these may be used alone or in combination of two or more.

The (D) additives may be appropriately included within a range that does not impair the properties of the thermoplastic resin composition, and specifically, may be included in an amount of less than or equal to 20 parts by weight based on 100 parts by weight of the (A) base resin, but is not limited thereto.

**(Molded Article)**

In another embodiment, a molded article using the thermoplastic resin composition is provided.

The thermoplastic resin composition secures excellent appearance characteristics, coloring properties, weather resistance, initial gloss, etc., and may maintain a gloss retention rate at an excellent level. Accordingly, a molded article using the thermoplastic resin composition is particularly suitable for application to high-gloss exterior materials for automobiles.

The molded article of an embodiment may be manufactured by a known method. For example, the thermoplastic resin composition may be manufactured by extrusion and/or injection molding.

The molded article of an embodiment may have a lightness (L) as measured by the specular component excluded (SCE) mode according to ASTM E308 of less than or equal to 10.5, less than or equal to 10.4, less than or equal to 10.3, less than or equal to 10.2, less than or equal to 10.1, or less than or equal to 10.0. Since the lower the lightness, the better the black coloring property is evaluated, the lower limit is not particularly limited, but may be greater than or equal to 5.0, greater than or equal to 6.0, greater than or equal to 7.0, greater than or equal to 8.0, or greater than or equal to 9.0.

For example, the lightness may be measured according to ASTM E308 standard by the specular component excluded (SCE) mode on a specimen measuring 90 mm x 50 mm x 2.5 mm using a Konica-Minolta CM-3700d spectrophotometer.

In addition, the molded article of an embodiment may have a color change (dE) before/after the weather resistance evaluation according to Equation 1 of less than or equal to 3.5, less than or equal to 3.4, less than or equal to 3.3, less than or equal to 3.2, less than or equal to 3.1, or less than or equal to 3.0 when evaluated for weather resistance according to SAE J2527. The lower the color change (dE) above, the better the weather resistance, especially the discoloration resistance to light such as UV, is evaluated to be; therefore, the lower limit is not particularly limited, but may be greater than or equal to 0.5, greater than or equal to 1.0, greater than or equal to 1.5, or greater than or equal to 2.0:

[Equation 1]

$$dE = \sqrt{(dL)^2 + (da)^2 + (db)^2}$$

In the Equation 1, dE denotes a color change before/after the weather resistance evaluation of the molded article; and L, a, and b are values measured using a spectrophotometer according to the CIE1976 colorimetric system, respectively, where dL denotes a difference in L values before/after the weather resistance evaluation of the molded article, da denotes a difference in a values before/after the weather resistance evaluation of the molded article, and db denotes a difference in b values before/after the weather resistance evaluation of the molded article.

For example, the dE value according to Equation 1 may be obtained by evaluating weather resistance under exposure conditions of 4,500 kJ/m$^2$ using the ATLAS CI5000 Weather-Ometer, a weather resistance tester according to the SAE J2527 standard, and then calculating dL, da, and db using the Konica-Minolta CM-2500C spectrophotometer according to the CIE1976 colorimetric system, and substituting these values into Equation 1 to obtain dE.

Additionally, the molded article of an embodiment may have a gloss retention rate of greater than or equal to 30%, greater than or equal to 31%, greater than or equal to 32%, or greater than or equal to 33% according to Equation 2 when evaluated for weather resistance according to SAE J2527. The higher the gloss retention rate, the better the weather resistance, especially the discoloration resistance to light such as UV, is evaluated to be; therefore, the upper limit is not specifically limited, but may be less than or equal to 60%, less than or equal to 59%, less than or equal to 58%, or less than or equal to 57%:

Gloss retention rate (%) = 100 (%) × [(Initial gloss of the molded article) - (Gloss of the molded article after weather resistance evaluation)] / (Initial gloss of the molded article)          [Equation 2]

In Equation 2, the initial gloss of the molded article and the gloss of the molded article after evaluating the weather resistance of the molded article are each based on an angle of 60° to the light source.

For example, the gloss retention rate according to Equation 2 may be measured by measuring the gloss at a 60° angle from the light source using Nippon Denshoku VG-7000 equipment before/after the weather resistance evaluation.

**[Mode for Invention]**

Hereinafter, the present invention is illustrated in more detail with reference to examples. These examples, however, are not in any sense to be interpreted as limiting the scope of the invention.

Examples 1 to 10 and Comparative Examples 1 to 11

Each component and common component listed in Tables 1 and 2 were mixed in a conventional mixer and then, melted/kneaded by using a twin-screw extruder with L/D = 29, Φ = 45 mm at a barrel temperature of about 220°C, manufacturing thermoplastic resin compositions of Examples 1 to 10 and Comparative Examples 1 to 11 in the form of pellets.

The common component was 2.5 parts by weight of a carbon black masterbatch (40 wt% of carbon black + 60 wt% of styrene-acrylonitrile copolymer), which expresses black color, based on 100 parts by weight of the base resin (A).

Each of the thermoplastic resin compositions pelletized through the twin-screw extruder was dried at about 80°C for about 4 hours and injection-molded by using a 6 oz injection-molding machine set to a cylinder temperature of about 240°C and a mold temperature of about 60°C, manufacturing specimens for measuring properties. Measured properties of the specimens are shown in Tables 3 and 4.

In Tables 1 and 2, the components (A-1) to (A-4) were expressed by wt% based on a total weight of the components (A-1) to (A-4), and the components (B-1) to (C-2) were expressed by parts by weight based on 100 parts by weight of the total weight of the components (A-1) to (A-4).

(Table 1)

|  |  | Example 1 | Example 2 | Example 3 | Example 4 | Example 5 | Example 6 | Example 7 | Example 8 | Example 9 | Example 10 |
|---|---|---|---|---|---|---|---|---|---|---|---|
| A | A-1 | 40 | 40 | 40 | 40 | 40 | 40 | 40 | 40 | 40 | 40 |
|  | A-2 | 40 | 20 | 20 | 40 | 20 | 20 | 20 | 20 | 20 | 20 |
|  | A-3 | 20 | 20 | 10 | 10 | 20 | 20 | 20 | 20 | 20 | 20 |
|  | A-4 | - | 20 | 30 | 10 | 20 | 20 | 20 | 20 | 20 | 20 |
| B | B-1 | 3 | 3 | 3 | 3 | 2 | 5 | 3 | 3 | 3 | 3 |
| C | C-1 | 1 | 1 | 1 | 1 | 1 | 1 | 0.5 | 2 | 1 | 1 |
|  | C-2 | 1 | 1 | 1 | 1 | 1 | 1 | 1 | 1 | 0.5 | 2 |

(Table 2)

|  |  | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|
| A | A-1 | 40 | 40 | 40 | 40 | 40 | 40 | 40 | 40 | 40 | 40 | 40 |
|  | A-2 | - | - | 20 | 40 | 40 | 20 | 20 | 20 | 20 | 20 | 20 |
|  | A-3 | - | 20 | 20 | 20 | - | 20 | 20 | 20 | 20 | 20 | 20 |
|  | A-4 | 60 | 40 | 20 | - | 20 | 20 | 20 | 20 | 20 | 20 | 20 |
| B | B-1 | 3 | - | 3 | 3 | - | 3 | 3 | 3 | 3 | 3 | 1 |

(continued)

| | | Comp arativ e Exam ple 1 | Comp arativ e Exam ple 2 | Comp arativ e Exam ple 3 | Comp arativ e Exam ple 4 | Comp arativ e Exam ple 5 | Comp arativ e Exam ple 6 | Comp arativ e Exam ple 7 | Comp arativ e Exam ple 8 | Comp arativ e Exam ple 9 | Comp arativ e Exam ple 10 | Comp arativ e Exam ple 11 |
|---|---|---|---|---|---|---|---|---|---|---|---|---|
| C | C-1 | 1 | 1 | - | 2 | 1 | 1 | 1 | - | 0.1 | 5 | 1 |
| | C-2 | 1 | 1 | - | - | 1 | - | - | 1 | 0.1 | 5 | 1 |
| The component listed in Table 1 and 2 are as follows. | | | | | | | | | | | | |

[(A) Base Resin]

(A-1) Acrylate-based Graft Copolymer

Acrylonitrile-styrene-acrylate graft copolymer including a core composed of a butyl acrylate-based rubbery polymer; and a shell formed by graft-polymerizing an acrylonitrile-styrene copolymer onto the core (wherein the core had an average particle diameter of about 130 nm and a content of about 50 wt% in a core-shell particle) (g-ASA, Lotte Chemical Corp.)

(A-2) Alpha-methyl Styrene-based Copolymer

Alpha-methyl styrene-styrene-acrylonitrile copolymer having about 54 wt% of an alpha-methyl styrene-derived component, a glass transition temperature (Tg) of about 118°C, and a weight average molecular weight of about 170,000 g/mol (AMS-SAN, Lotte Chemical Corp.)

(A-3) Polyalkyl (Meth)acrylate Resin

Polymethyl methacrylate resin having a weight average molecular weight of about 100,000 g/mol (PMMA, Lotte MCC Corp.)

(A-4) First Aromatic Vinyl-Vinyl Cyanide Copolymer

Styrene-acrylonitrile copolymer (SAN, Lotte Chemical Corp.) including about 34 wt% of an acrylonitrile-derived component and having a weight average molecular weight of about 100,000 g/mol

[(B) Second Aromatic Vinyl-Vinyl Cyanide Copolymer]

(B-1) Styrene-acrylonitrile copolymer (Super-high molecular weight SAN, Weihai Jinhass Chemical Co., Ltd.) having a weight average molecular weight of about 5,000,000 g/mol

[(C) Light Stabilizer]

(C-1) Monomolecular First Light Stabilizer

First hindered amine light stabilizer (BASF SE) having a molecular weight of about 480

(C-2) Polymeric Second Light Stabilizer

Second hindered amine light stabilizer (BASF SE) having a weight average molecular weight of about 2,000 g/mol

**Property Evaluation**

The specimens according to Examples 1 to 10 and Comparative Examples 1 to 11 were measured with respect to heat resistance, coloring properties, weather resistance, initial gloss, a gloss retention rate, and appearance in the following method, and the results are shown in Tables 3 and 4.

### (1) Evaluation of Heat Resistance

The specimens with a size of 12.5 mm * 12.5 mm * 3.0 mm were measured with respect to a Vicat softening temperature (VST, unit: °C) under the B50 conditions (load: 50 N, heating speed: 50°C/hr) of ISO 306.

### (2) Evaluation of Coloring Properties

The specimens with a size of 90 mm * 50 mm * 2.5 mm were measured with respect to lightness (L) by using a Konica-Minolta CM-3700d spectrophotometer in a specular component excluded (SCE) mode according to ASTM E308. The lower lightness, the better black color, which confirmed excellent coloring properties.

### (3) Evaluation of Weather Resistance

The specimens with a size of 90 mm * 50 mm * 2.5 mm were evaluated with respect to weather resistance under exposure condition of 4,500 kJ/m$^2$ by using CI5000 Weather-Ometer made by ATLAS Material Testing Solutions, which is a weather resistance tester according to SAE J2527, and then, dL, da, and db was obtained by using CM-2500C spectrophotometer made by Konica Minolta Inc. according to CIE1976 colorimetric system and then, substituted onto Equation 1 to calculate a color change (dE) before/after the weather resistance evaluation.

- Light source: Xenon Arc Lamp
- Irradiance: 0.55 W/m$^2$ @ 340 nm
- Temperature (Temp.): 38°C
- Black panel temperature: 70°C
- Relative humidity: 50%
- Test duration (1 cycle, 4 phases): 3 hrs/1 cycle

    L: Lightness
    a: red (+) <-> green (-)
    b: yellow (+) <-> blue (-)

### (4) Evaluation of Initial Gloss

The specimens with a size of 90 mm * 50 mm * 2.5 mm were measured with respect to gloss (unit: GU) at an angle of 60° from a light source by using VG-7000 equipment made by Nippon Denshoku Industries Co., Ltd.

### (5) Evaluation of Gloss Retention Rate

After evaluating the weather resistance as in the (3), the gloss at an angle of 60° from the light source was measured by using VG-7000 equipment made by Nippon Denshoku Industries Co., Ltd. and then, used to calculate a gloss retention rate (unit: %) according to Equation 2.

### (6) Evaluation of Appearance

For each specimen with a size of 200 mm * 40 mm * 2.5 mm that was injection-molded using a mold having a pin-point gate structure, whether or not flow marks occurred was visually checked and then, evaluated according to the following criteria.

- Non-occurrence: No flow marks occur on the surface.
- Occurrence: A large number of flow marks occur on the surface.

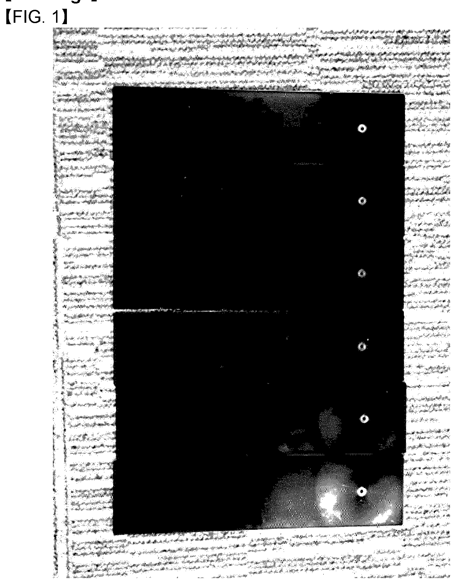

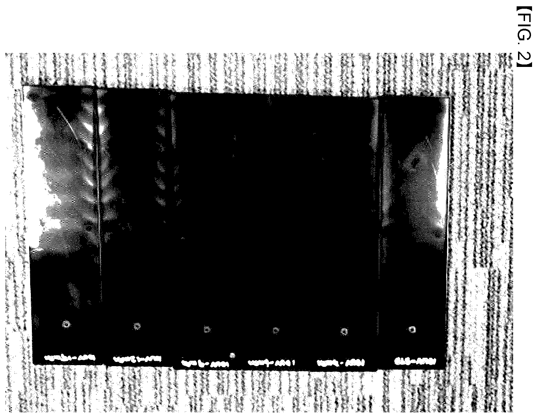

In addition, the specimens of Example 2 and Comparative Example 2 for evaluating appearance defects were taken a surface image of, and the images are shown in FIG. 1 and FIG. 2.

(Table 3)

|  | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| VST | 100.5 | 97.6 | 97.3 | 101.1 | 96.9 | 97.7 | 97.0 | 95.6 | 97.3 | 98.4 |

(continued)

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Lightness (L) | 9.4 | 9.0 | 9.9 | 10.1 | 9.8 | 9.2 | 9.0 | 9.2 | 8.9 | 9.4 |
| Color change (dE) | 2.3 | 2.6 | 3.2 | 3.1 | 2.7 | 2.6 | 2.9 | 1.8 | 2.8 | 1.4 |
| Initial gloss | 96.3 | 93.8 | 93.4 | 93.2 | 94.5 | 94.6 | 94.4 | 94.8 | 93.3 | 93.5 |
| Gloss retention rate | 56.1 | 45.3 | 33.4 | 38.1 | 44.8 | 45.9 | 40.3 | 59.8 | 43.4 | 61.2 |
| Occurrence of flow marks | Non-occurrence | Non-occurrence | Non-occurrence | Non-occurrence | Non-occurrence | Non-occurrence | Non-occurrence | Non-occurrence | Non-occurrence | Non-occurrence |

(Table 4)

| | Com p. Ex. 1 | Com p. Ex. 2 | Com p. Ex. 3 | Com p. Ex. 4 | Com p. Ex. 5 | Com p. Ex. 6 | Com p. Ex. 7 | Com p. Ex. 8 | Com p. Ex. 9 | Com p. Ex. 10 | Com p. Ex. 11 |
|---|---|---|---|---|---|---|---|---|---|---|---|
| VST | 94.5 | 94.3 | 97.5 | 99.8 | 100.9 | 97.2 | 96.8 | 97.2 | 97.1 | 90.4 | 96.9 |
| Lightness (L) | 10.8 | 8.7 | 9.9 | 8.7 | 11.2 | 10.5 | 9.1 | 9.2 | 9.1 | 11.0 | 9.4 |
| Color change (dE) | 6.3 | 3.8 | 5.6 | 4.1 | 4.6 | 5.0 | 4.0 | 4.0 | 5.1 | 1.0 | 2.9 |
| Initial gloss | 95.1 | 94.8 | 93.3 | 94.1 | 94.9 | 94.8 | 93.3 | 93.3 | 93.7 | 95.4 | 94.1 |
| Gloss retention rate | 3.9 | 29.4 | 16.8 | 26.4 | 25.3 | 13.4 | 25.4 | 29.7 | 20.6 | 49.8 | 42.1 |
| Occurrence of flow marks | Non-occurrence | Occurrence | Non-occurrence | Non-occurrence | Occurrence | Occurrence | Non-occurrence | Non-occurrence | Non-occurrence | Non-occurrence | Occurrence |

Referring to Tables 3 to 4, Examples 1 to 10, compared with Comparative Examples 1 to 11, exhibited excellent heat resistance, coloring properties, weather resistance, initial gloss, and appearance and also, maintained an excellent gloss retention rate. Accordingly, the thermoplastic resin compositions of an embodiment, which were represented by Examples 1 to 10, were particularly suitable for application to high-gloss exterior materials for automobiles.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising
   based on (A) 100 parts by weight of a base resin including

   (A-1) 35 to 45 wt% of an acrylate-based graft copolymer;
   (A-2) 20 to 40 wt% of an alpha-methyl styrene-based copolymer;
   (A-3) 10 to 20 wt% of a polyalkyl (meth)acrylate resin; and
   (A-4) 0 to 30 wt% of a first aromatic vinyl compound-vinyl cyanide compound copolymer,
   (B) 2 to 5 parts by weight of a second aromatic vinyl compound-vinyl cyanide compound copolymer, which has a weight average molecular weight of 20 times or more that of the first aromatic vinyl compound-vinyl cyanide compound copolymer (A-4);

(C-1) 0.5 to 2 parts by weight of a monomolecular first light stabilizer; and
(C-2) 0.5 to 2 parts by weight of a polymeric second light stabilizer.

2. The thermoplastic resin composition of claim 1, wherein
the (A-1) acrylate-based graft copolymer is a particle having a core-shell structure including a core composed of an acrylate-based rubbery polymer; and a shell formed by graft polymerization of an aromatic vinyl compound-vinyl cyanide compound copolymer onto the core.

3. The thermoplastic resin composition of claim 1 or claim 2, wherein
the (A-1) acrylate-based graft copolymer is an acrylonitrile-styrene-acrylate graft copolymer.

4. The thermoplastic resin composition of any one of claim 1 to claim 3, wherein
the (A-2) alpha-methyl styrene-based copolymer is an alpha-methyl styrene-styrene-acrylonitrile copolymer.

5. The thermoplastic resin composition of any one of claim 1 to claim 4, wherein
the (A-4) first aromatic vinyl compound-vinyl cyanide compound copolymer has a weight average molecular weight of 90,000 to 200,000 g/mol.

6. The thermoplastic resin composition of any one of claim 1 to claim 5, wherein
the (A-4) first aromatic vinyl compound-vinyl cyanide compound copolymer is a first styrene-acrylonitrile copolymer.

7. The thermoplastic resin composition of any one of claim 1 to claim 6, wherein
an amount of the (A-4) first aromatic vinyl compound-vinyl cyanide compound copolymer in the (A) base resin is 5 to 30 wt%.

8. The thermoplastic resin composition of any one of claim 1 to claim 7, wherein
the (B) second aromatic vinyl compound-vinyl cyanide compound copolymer has a weight average molecular weight of 4,000,000 to 10,000,000 g/mol.

9. The thermoplastic resin composition of any one of claim 1 to claim 8, wherein
the (B) second aromatic vinyl compound-vinyl cyanide compound copolymer is a second styrene-acrylonitrile copolymer.

10. The thermoplastic resin composition of any one of claim 1 to claim 9, wherein
the (C-1) monomolecular first light stabilizer is a first hindered amine light stabilizer having a molecular weight of 100 to 500.

11. The thermoplastic resin composition of any one of claim 1 to claim 10, wherein
the (C-2) polymeric second light stabilizer is a second hindered amine light stabilizer having a weight average molecular weight of 1,500 to 3,500 g/mol.

12. A molded article using the thermoplastic resin composition according to any one of claims 1 to 11.

13. The molded article of claim 12, wherein
the molded article has a lightness (L) of 5 to 10.5 as measured according to ASTM E308 using a specular component excluded (SCE) mode.

14. The molded article of claim 12 or claim 13, wherein
the molded article has a color change (dE) before/after the weather resistance evaluation according to Equation 1 of 0.5 to 3.5 when evaluated for weather resistance according to SAE J2527:

[Equation 1]

$$dE = \sqrt{(dL)^2 + (da)^2 + (db)^2}$$

wherein, in Equation 1,

dE denotes a color change before/after the weather resistance evaluation of the molded article; and

L, a, and b are values measured using a spectrophotometer according to the CIE1976 colorimetric system, respectively, where dL denotes a difference in L values before/after the weather resistance evaluation of the molded article, da denotes a difference in a values before/after the weather resistance evaluation of the molded article, and db denotes a difference in b values before/after the weather resistance evaluation of the molded article.

15. The molded article of any one of claim 12 to claim 14, wherein

a gloss retention rate of greater than or equal to 30% according to Equation 2 when evaluating weather resistance according to SAE J2527:

Gloss retention rate (%) = 100 (%) × [(Initial gloss of the molded article) - (Gloss of the molded article after weather resistance evaluation)] / (Initial gloss of the molded article)    [Equation 2]

wherein, in Equation 2,

the initial gloss of the molded article and the gloss of the molded article after evaluating the weather resistance of the molded article are each based on an angle of 60° to the light source.

【FIG. 1】

【FIG. 2】

## INTERNATIONAL SEARCH REPORT

International application No.

**PCT/KR2023/018507**

### A. CLASSIFICATION OF SUBJECT MATTER

**C08L 51/04**(2006.01)i; **C08L 25/08**(2006.01)i; **C08L 25/12**(2006.01)i; **C08L 33/06**(2006.01)i; **C08F 265/06**(2006.01)i

According to International Patent Classification (IPC) or to both national classification and IPC

### B. FIELDS SEARCHED

Minimum documentation searched (classification system followed by classification symbols)

C08L 51/04(2006.01); C08K 5/09(2006.01); C08K 5/3432(2006.01); C08K 5/3492(2006.01); C08L 23/12(2006.01); C08L 25/16(2006.01); C08L 35/06(2006.01); C08L 51/06(2006.01); C08L 55/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 아크릴계 그라프트 공중합체(acrylic graft copolymer), 알파메틸 스티렌계 공중합체(alphamethyl styrene copolymer), 폴리알킬 (메타)아크릴레이트 수지(polyalkyl (meth)acrylate resin), 방향족 비닐 화합물-시안화 비닐 화합물 공중합체(aromatic vinyl compound-vinyl cyanide compound copolymer), 광 안정제(light stabilizer)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0015107 A (LOTTE CHEMICAL CORPORATION) 10 February 2021 (2021-02-10)<br>See claims 1-7; and paragraph [0078]. | 1-3 |
| Y | KR 10-2019-0114898 A (LOTTE ADVANCED MATERIALS CO., LTD.) 10 October 2019 (2019-10-10)<br>See claim 1. | 1-3 |
| Y | KR 10-2022-0135969 A (LOTTE CHEMICAL CORPORATION) 07 October 2022 (2022-10-07)<br>See claim 1; and paragraph [0050]. | 1-3 |
| A | KR 10-0645260 B1 (CHEIL INDUSTRIES INC.) 14 November 2006 (2006-11-14)<br>See entire document. | 1-3 |
| A | KR 10-2022-0107757 A (LG CHEM, LTD.) 02 August 2022 (2022-08-02)<br>See entire document. | 1-3 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **22 February 2024** | **23 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/018507**

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **13**
because they relate to parts of the international application that do not comply with the prescribed requirements to such an extent that no meaningful international search can be carried out, specifically:

Claim 13 refers to a claim violating the manner of referring to a dependent claim (PCT Rule 6.4(a)), and thus is unclear.

3. ☑ Claims Nos.: **4-12, 14-15**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/KR2023/018507**

| Patent document cited in search report | | | Publication date (day/month/year) | Patent family member(s) | | | Publication date (day/month/year) |
|---|---|---|---|---|---|---|---|
| KR | 10-2021-0015107 | A | 10 February 2021 | CN | 112300508 | A | 02 February 2021 |
| | | | | CN | 112300508 | B | 17 February 2023 |
| | | | | EP | 3771729 | A1 | 03 February 2021 |
| | | | | KR | 10-2396611 | B1 | 10 May 2022 |
| | | | | US | 11781005 | B2 | 10 October 2023 |
| | | | | US | 2021-0032455 | A1 | 04 February 2021 |
| KR | 10-2019-0114898 | A | 10 October 2019 | KR | 10-2266583 | B1 | 18 June 2021 |
| | | | | US | 2021-0024735 | A1 | 28 January 2021 |
| KR | 10-2022-0135969 | A | 07 October 2022 | WO | 2022-211458 | A1 | 06 October 2022 |
| KR | 10-0645260 | B1 | 14 November 2006 | None | | | |
| KR | 10-2022-0107757 | A | 02 August 2022 | None | | | |

Form PCT/ISA/210 (patent family annex) (July 2022)